# EUROPEAN PATENT APPLICATION

(11) **EP 4 742 559 A1**
(43) Date of publication of application: **13.05.2026**
(21) Application number: 24847633.5
(22) Date of filing: 09.04.2024
(51) Int. Cl.: H04B 10/079

(54) **LIGHTLESS PATH DETECTION METHOD AND DETECTION SYSTEM, CONTROLLER, AND MEDIUM**

(30) Priority: 31.07.2023 CN 202310960651
(71) Applicant: ZTE Corporation, Shenzhen, Guangdong 518057 (CN)
(72) Inventor: YAN, Baoluo, Shenzhen, Guangdong 518057 (CN); ZHOU, Jinlong, Shenzhen, Guangdong 518057 (CN); SHI, Hu, Shenzhen, Guangdong 518057 (CN)
(74) Representative: Savi, Massimiliano
(86) International application number: PCT/CN2024/086844
(87) International publication number: WO 2025/025667

(57) **Abstract**

The present application discloses a lightless path detection method and detection system, a controller, and a medium. The detection method is applied to an optical transceiver assembly in a lightless path, and the optical transceiver assembly is provided with probe light. The method comprises: by means of probe light, acquiring first power spectrum data of an output end of the current optical transceiver assembly and second optical power spectrum data of an input end of a downstream optical transceiver assembly of the current optical transceiver assembly (S110); calibrating optical parameters of an optical layer model on the basis of the first power spectrum data and the second power spectrum data to obtain an optimized target optical layer model (S120); and in response to a service being switched to a lightless path, determining an optical signal-to-noise ratio of the lightless path on the basis of the target optical layer model (S130).

## Description

### CROSS-REFERENCE TO RELATED APPLICATION

This application is filed on the basis of the Chinese patent application No. 2023109606514 filed July 31, 2023, and claims priority of the Chinese patent application, the entire contents of which are incorporated herein by reference.

### TECHNICAL FIELD

The present disclosure relates to the field of optical communication and sensing, and in particular to a method for detecting an unlit path, a detection system, a controller, and a medium.

### BACKGROUND

The Quality of Transmission (QoT) of an optical system is a comprehensive measure of the transmission performance and reliability of optical signals within an optical network system. In existing optical network systems, QoT evaluation is primarily performed by collecting performance parameters at each node, such as channel optical power, service code pattern, fiber type and length, amplifier type, and gain setting, and combining these parameters with impairment models of the optical system, including amplifiers, fibers, and optical modules. Through this approach, the performance of any node within the optical network can be sensed and optimized, which provides significant application value in optical network operation and maintenance.

However, in practical applications, the generalization capability of the model faces multiple challenges, such as variations in fiber attenuation due to aging, degradation of device performance, and periodic temperature fluctuations. In existing optical networks, the built-in calibration data of underlying device models is often difficult to obtain and typically empirical values are relied on. As a result, current detection methods for standby/unlit path scenarios exhibit limitations in calibrating undetermined parameters of the model. These limitations constrain the accuracy of existing unlit path detection methods and hinder high-precision estimation of key data such as optical signal-to-noise ratio (OSNR) during service routing recovery in optical network operation and maintenance, thereby reducing the success rate of service routing recovery.

### SUMMARY

The following is a summary of the subject matter described herein. This summary is not intended to limit the scope of protection of the claims.

Provided are a method for detecting an unlit path, a detection system, a controller, and a medium in various embodiments of the present disclosure.

According to a first aspect of the present disclosure, a method for detecting an unlit path is provided. The method is applied to an optical transceiver assembly arranged in the unlit path. The optical transceiver assembly is provided with a probe light. The method includes: -acquiring first optical power spectrum data at an output end of a current optical transceiver assembly, and second optical power spectrum data at an input end of a downstream optical transceiver assembly of the current optical transceiver assembly by means of the probe light;-calibrating optical parameters of a plurality of optical layer models based on the first optical power spectrum data and the second optical power spectrum data to obtain a plurality of optimized target optical layer models;- and determining an optical signal-to-noise ratio (OSNR) of the unlit path based on the target optical layer models, in response a service switching to the unlit path.

According to a second aspect of the present disclosure, a system for detecting an unlit path is provided. The system includes: -a probe light, which is configured to acquire first optical power spectrum data at an output end of a current optical transceiver assembly, and second optical power spectrum data at an input end of a downstream optical transceiver assembly of the current optical transceiver assembly; and -an optical transceiver assembly, which is configured to calibrate optical parameters of an optical layer model based on the first optical power spectrum data and the second optical power spectrum data to obtain an optimized target optical layer model; and to determine an optical signal-to-noise ratio (OSNR) of the unlit path based on the target optical layer model in response to a service switching to the unlit path.

According to a third aspect of the present disclosure, a controller is provided. The controller includes a memory, a processor, and a computer program stored in the memory and executable on the processor which, when is executed by the processor, causes the processor to carry out any one of the methods described above.

According to a fourth aspect of the present disclosure, a computer-readable storage medium is provided. The computer-readable storage medium stores a computer-executable instruction which, when executed by a processor causes the processor to carry out any one of the methods as described above.

Other features and advantages of the present invention will be illustrated in the following description, and in part will be apparent from the description, or may be understood by practicing the present invention. The objectives and other advantages of the present invention can be achieved and obtained by the structure particularly set forth in the description, claims and drawings.

### BRIEF DESCRIPTION OF DRAWINGS

FIG. 1 depicts a flowchart showing a method for detecting an unlit path according to an embodiment of the present disclosure;
FIG. 2 depicts a schematic diagram showing an optical network according to an embodiment of the present disclosure;
FIG. 3 depicts a flowchart showing an implementation of operation S120 described in FIG. 1 according to an embodiment of the present disclosure;
FIG. 4 depicts a flowchart of additional operations following operation S330 described in FIG. 3 according to another embodiment of the present disclosure;
FIG. 5 depicts a flowchart showing additional operations preceding operation S340 described in FIG. 3 according to an embodiment of the present disclosure;
FIG. 6 depicts a flowchart showing an implementation of operation S130 described in FIG. 1 according to an embodiment of the present disclosure;
FIG. 7 depicts a flowchart showing an implementation of operation S620 described in FIG. 6 according to an embodiment of the present disclosure;
FIG. 8 depicts a flowchart of additional operations following operation S730 described in FIG. 7 according to another embodiment of the present disclosure;
FIG. 9 depicts a flowchart showing the determination of the overall optical signal-to-noise ratio of the unlit path according to an embodiment of the present disclosure;
FIG. 10 depicts a schematic diagram showing an optical transceiver assembly according to an embodiment of the present disclosure;
FIG. 11 depicts a flowchart showing the acquisition of optimized target light layer model according to an embodiment of the present disclosure;
FIG. 12 depicts a flowchart showing the determination of the optical signal-to-noise ratio based on the target optical layer model according to an embodiment of the present disclosure; and
FIG. 13 depicts a schematic diagram of a controller according to an embodiment of the present disclosure.

### List of Reference numerals:

201. Operating path;
202. Standby path;
203. Upstream optical cross-connect;
204. Downstream optical cross-connect;
205. Intermediate optical cross-connect;
1001. Output end of current optical transceiver assembly;
1002. Downstream optical transceiver assembly;
1003. High-isolation port of Wavelength Selective Switch (WSS).

### DETAILED DESCRIPTION

The purpose, technical scheme and advantages of the present invention will become apparent through the following description for various embodiments in conjunction with the drawings. It should be understood that the embodiments described here are intended for illustration but not limitation of the present invention.

In some embodiments, although the system is shown with individual functional modules in the schematic diagram and the logical sequences are shown in the flow chart, in some cases, the system can have different modules than those shown and the operations can be executed in a different order than those shown. It should be noted that the terms "first" and "second", if used in the description, the claims and the drawings are intended to distinguish similar objects, and do not necessarily imply any specific order or sequence.

Furthermore, unless otherwise expressly specified and defined, the term "connected/connection" shall be broadly construed. For example, it may refer to a fixed connection or a movable connection, a detachable connection or a permanent connection, or an integral connection; it may refer to a mechanical connection, an electrical connection, or a connection enabling communication; it may refer to a direct connection or an indirect connection established through an intermediate medium.

In the description of the embodiments of the present disclosure, references to the terms "one embodiment/mode," "another embodiment/implementation," "certain embodiment/implementation," and "the above embodiment/implementation" are intended to indicate that the specific features, structures, materials, or characteristics described in connection with an embodiment or example may be included in at least two embodiments or modes disclosed in the present disclosure. In the present disclosure, the illustrative expressions of the above terms are not intended to be limited to the same embodiment or mode, but rather indicate that the features associated with such terms may respectively exist in different embodiments or implementations. It shall be noted that, in some cases, the operations shown or described may be performed in a different order than the logical order shown in the flowcharts.

The Quality of Transmission (QoT) of an optical system is a comprehensive measure of the transmission performance and reliability of optical signals within an optical network system. In existing optical network systems, optical system transmission quality evaluation is mainly achieved by collecting performance parameters (such as channel optical power, service code type, fiber type and length, optical amplifier type, gain setting, etc.) at each node along with optical system impairment models (including the parameters of e.g., optical amplifiers, optical fibers, optical modules, etc.) to perceive and optimize the performance of any node in the optical network. This approach has significant application value in optical network operation and maintenance. On unlit paths (i.e., standby or recovery paths), the limited performance data that can be collected increases the difficulty of the estimation with models of standby path compared to the estimation of the optical signal-to-noise ratio (OSNR) of the operating paths. If the underlying model can achieve high-precision OSNR prediction, it can guide operation and maintenance tools to configure reasonable preset attenuation for each optical service, thereby improving the success rate of single recovery when switching to an unlit standby path service during optical path recovery.

However, in practical applications, the generalization capability of the model faces multiple challenges, such as variations in fiber attenuation due to aging, degradation of device performance, and periodic temperature fluctuations. In existing optical networks, the built-in calibration data of underlying device models is often difficult to obtain and typically empirical values are relied on. As a result, current detection methods for standby/unlit path scenarios exhibit limitations in calibrating undetermined parameters of the model. These limitations constrain the accuracy of existing unlit path detection methods and hinder high-precision estimation of key data such as optical signal-to-noise ratio (OSNR) during service routing recovery in optical network operation and maintenance, thereby reducing the success rate of service routing recovery.

In view of this, a method for detecting an unlit path, a detection system, a controller, and a medium are provided in various embodiments of the present disclosure. The method is applied to an optical transceiver assembly arranged in the unlit path. The optical transceiver assembly is configured to emit a probe light. The method includes: -acquiring first optical power spectrum data at an output end of a current optical transceiver assembly, and second optical power spectrum data at an input end of a downstream optical transceiver assembly of the current optical transceiver assembly by means of the probe light;-calibrating optical parameters of a plurality of optical layer models based on the first optical power spectrum data and the second optical power spectrum data to obtain a plurality of optimized target optical layer models;- and determining an optical signal-to-noise ratio (OSNR) of the unlit path based on the target optical layer models, in response a service switching to the unlit path. Through the above method, the present disclosure enables effective parameter calibration of the underlying optical layer model for the unlit path, thereby improving prediction accuracy and further achieving high-precision end-to-end estimation of the optical signal-to-noise ratio (OSNR) of services, so as to enhance the success rate of service routing recovery in optical network operation and maintenance.

Several embodiments of the present disclosure will be described in greater detail in conjunction with the drawings.

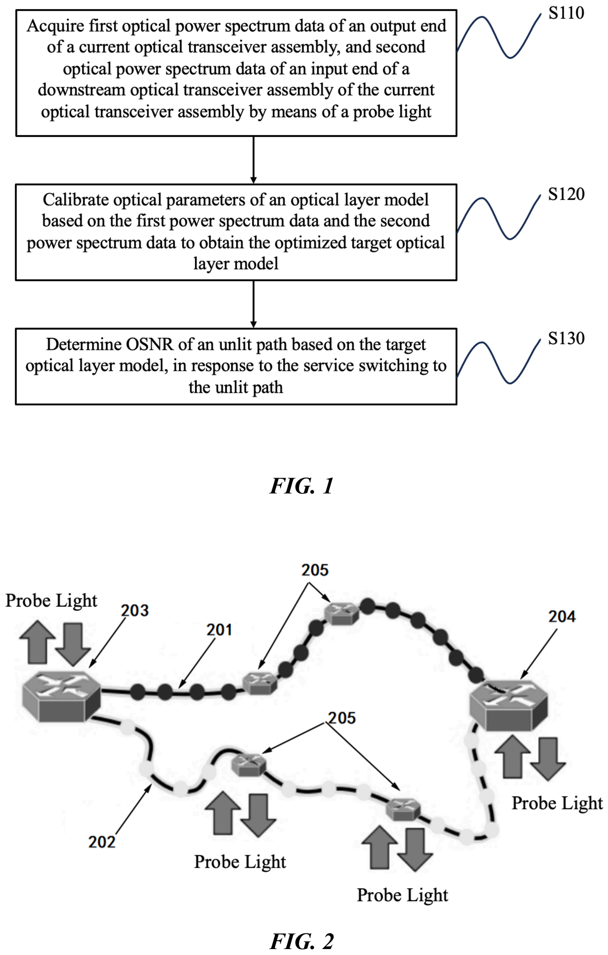

As shown in FIG. 1, according to an embodiment of the present disclosure, a method for detecting an unlit path. The method is applied to an optical transceiver assembly in the unlit path. The optical transceiver assembly is configured to emit a probe light. The method may include, without limitations, operations S110 to S130.

At operation S110, first optical power spectrum data of an output end of a current optical transceiver assembly, and second optical power spectrum data of an input end of a downstream optical transceiver assembly of the current optical transceiver assembly are acquired by means of a probe light.

At operation S120, optical parameters of an optical layer model are calibrated based on the first power spectrum data and the second power spectrum data to obtain the optimized target optical layer model.

At operation S130, an optical signal-to-noise ratio (OSNR) of an unlit path is determined based on the target optical layer model, in response to the service switching to the unlit path.

According to the operations S110 to S130 set forth in an embodiment of the present disclosure, by means of the probe light emitted by the optical transceiver assembly, the first power spectrum data at the output end of the current optical transceiver assembly and the second optical power spectrum data at the input end of the downstream optical transceiver assembly are accurately and effectively acquired. The optical parameters of the optical layer model are calibrated based on the first and second power spectrum data to improve the prediction accuracy of the optical layer model and obtain an optimized target optical layer model. Furthermore, when the current optical transceiver assembly is switched to the unlit path in response to a service switch, the OSNR of the unlit path is determined based on the target optical layer model. This enables high-precision end-to-end OSNR prediction in scenarios such as link degradation and interfacing between new and old equipment in the unlit path. The obtained OSNR can also be used to perform performance perception and optimization on any node in the optical network, improving the success rate of service recovery routing during optical network maintenance. This effectively reduces network maintenance costs and improves network maintenance efficiency, thereby enhancing the performance and reliability of the entire optical network and providing higher quality network services.

The above is a general illustration of operations S110 to S130 that will be described in greater detail below.

At operation S110, first optical power spectrum data of an output end of a current optical transceiver assembly, and second optical power spectrum data of an input end of a downstream optical transceiver assembly of the current optical transceiver assembly are acquired through a probe light.

Referring to FIG. 2, which depicts a schematic diagram showing an optical network according to in an embodiment of the present disclosure. In some embodiments, the optical transceiver assembly is arranged at each of the upstream optical cross-connect site 203, the intermediate optical cross-connect site 204, and the downstream optical cross-connect site 205 as shown in FIG. 2. The operating path 201 in FIG. 2 corresponds to the lit path under normal operating conditions, while the standby path 202 corresponds to the unlit path. An optical transceiver assembly is provided with a probe light at the beginning and end of each multiplexing segment (e.g., an optical cross-connect site) through the underlying hardware of the optical cross-connect site. As such, the probe light is emitted from the output end of the optical transceiver assembly at the upstream optical cross-connect site 203 and received at the input end of the optical transceiver assembly at the downstream optical cross-connect site 205. During this process, the first power spectrum data of the output end of the current optical transceiver assembly and the second optical power spectrum data of the input end of the downstream optical transceiver assembly of the current optical transceiver assembly are acquired through the corresponding data of the probe lights output from the upstream optical cross-connect site 203, the intermediate optical cross-connect site 204 and the downstream optical cross-connect site 205. This enables OSNR prediction for end-to-end service when the operating link is switched to the standby path 202 (unlit path) during service recovery. At the same time, the optical parameters in the link optical layer model are calibrated such that before the service recovery and link switch occur, the OSNR of the unlit path for link switch can be predicted. Then, based on the predicted OSNR, performance monitoring and optimization can be performed on any node in the optical network, improving the success rate of service routing recovery during optical network operation and maintenance.

In some embodiments, before the first power spectrum data of the output end of the current optical transceiver assembly and the second optical power spectrum data of the input end of the downstream optical transceiver assembly of the current optical transceiver assembly are acquired through the probe light, the probe light is first configured and activated so as to uniformly populate all channels across the entire supported spectral band with a fixed grid and bandwidth. In this way, the probe light entering the unlit path is maintained in a full-band state, thereby reducing errors and improving accuracy of prediction.

According to some embodiments, in an example scenario in which a 3-dB spectral width of 37.5 GHz and a grid of 50 GHz are used to populate 120 channels across a C-band spectral width of 6 THz, when the standby path (unlit path) carries a small number of services, the probe light bandwidth needs to be adjusted in steps of 6.25 GHz via a wavelength selective switch, such that the edge of the probe light is separated from the edge of any possible service channel by at least 12.5 GHz, thereby avoiding potential crosstalk and improving accuracy of prediction. At the same time, the per-channel launch power needs to be configured according to the requirements of the applied model, such that, after the probe light is activated, the output channel power of the optical power amplifier can be effectively acquired through the optical performance monitor arranged at the output side of the current optical transceiver assembly.

At operation S120, optical parameters of an optical layer model are calibrated based on the first power spectrum data and the second power spectrum data to obtain the optimized target optical layer model.

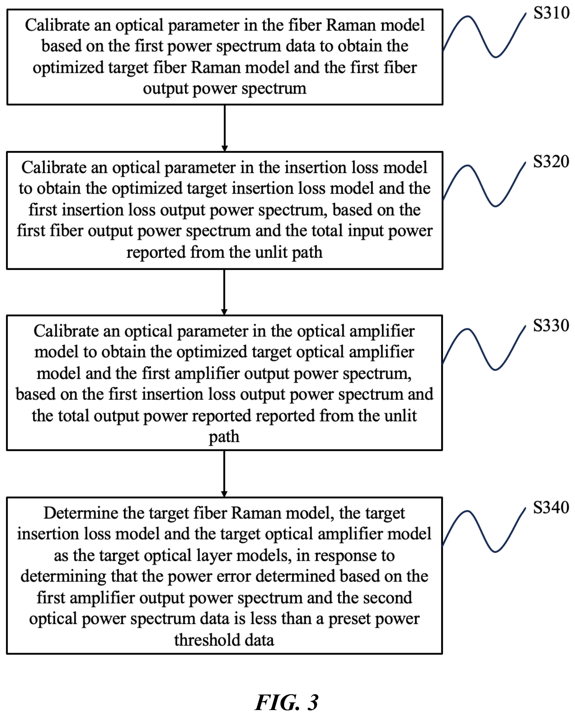

FIG. 3 depicts is a flowchart showing an implementation of operation S120 shown in FIG. 1 according to an embodiment of the present disclosure. In some embodiments, the optical layer model includes an optical fiber Raman model, an insertion loss model, and an optical amplifier model. The optical parameters of the optical layer model are calibrated according to the first power spectrum data and the second power spectrum data to obtain the optimized target optical layer model, which may include, without limitations, operations S310 to S340.

At operation S310, an optical parameter in the fiber Raman model is calibrated based on the first power spectrum data to obtain the optimized target fiber Raman model and the first fiber output power spectrum.

At operation S320, an optical parameter in the insertion loss model is calibrated to obtain the optimized target insertion loss model and the first insertion loss output power spectrum, based on the first fiber output power spectrum and the total input power reported from the unlit path.

At operation S330, an optical parameter in the optical amplifier model is calibrated to obtain the optimized target optical amplifier model and the first amplifier output power spectrum, based on the first insertion loss output power spectrum and the total output power reported from the unlit path.

At operation S340, the target fiber Raman model, the target insertion loss model and the target optical amplifier model are determined as the target optical layer models, in response to determining that the power error determined based on the first fiber output power spectrum and the second optical power spectrum is less than a preset power threshold data.

In some embodiments, operation S310 corresponds to the process of probe light entering the optical fiber. By running the optical fiber Raman model, the output power spectrum of the optical fiber can be calculated, and the optical parameters therein can be calibrated according to the final iteration error. The optical parameters include, but are not limited to, optical fiber wavelength-dependent loss, optical fiber Raman coefficient β , etc., so as to improve the prediction accuracy of the optical fiber Raman model.

In some embodiments, when the optical parameters include the fiber Raman coefficient β , the fiber Raman coefficient β can be effectively calibrated by obtaining link data from probe lights with different input powers into the corresponding link of the unlit path. The link data includes first power spectrum data and second optical power spectrum data.

In some implementation of operation S320, when performing calibration calculations on the optical parameters of the insertion-loss model, it is necessary to ensure that the total power of the input power spectrum calculated by the insertion-loss model is consistent with the input total power reported from the unlit path. If inconsistency is detected, the insertion-loss model input power spectrum is calibrated accordingly. The optical parameters of the insertion-loss model include device wavelength-dependent losses, and the input total power reported from the unlit path includes the input total power reported by optical amplifiers such as a pre-amplifier, a booster amplifier, or a line amplifier from the unlit path, so as to improve the prediction accuracy of the insertion-loss model.

In some embodiments of operation S330, when the measured data from the probe light is introduced into the amplifier model, the amplifier output power spectrum can be calculated. In this method, the optical parameters of the amplifier model are calibrated based on the final iterative error. The optical parameters of the amplifier model include, but are not limited to, amplifier gain spectrum function variables, amplifier noise factor spectrum function variables, and amplifier spectral hole-burning function variables, which effectively improve the prediction accuracy of the amplifier model.

In some embodiments, the calculated total power value of the amplifier output power spectrum must be consistent with the output total power reported from the unlit path. If inconsistency is detected, the output power spectrum of the amplifier model is calibrated. The output total power reported from the unlit path includes the output total power reported by optical amplifiers such as pre-amplifiers, booster amplifiers, or line amplifiers deployed on the unlit path.

In some embodiments, at operation S340, a model path power error *Err* is obtained by subtracting the calculated first amplifier output power spectrum from the second optical power spectrum data read at the input end of the downstream optical transceiver assembly of the current optical transceiver assembly . In some embodiments, when the error *Err* is less than a preset power threshold, it indicates that the accuracy of the currently calibrated and optimized model is relatively high, and the parameter calibration of the model has enabled the end-to-end downstream service to achieve consistency with the detection results of actual situations. The accuracy of the target optical layer model is therefore sufficient. In this case, the target fiber Raman model, the target insertion-loss model, and the target optical amplifier model can be determined as the target optical layer models. The target optical layer models are then capable of determining the OSNR of the unlit path in subsequent operations. Through the determination on the model path power error, the effectiveness of the parameter calibration can be ensured.

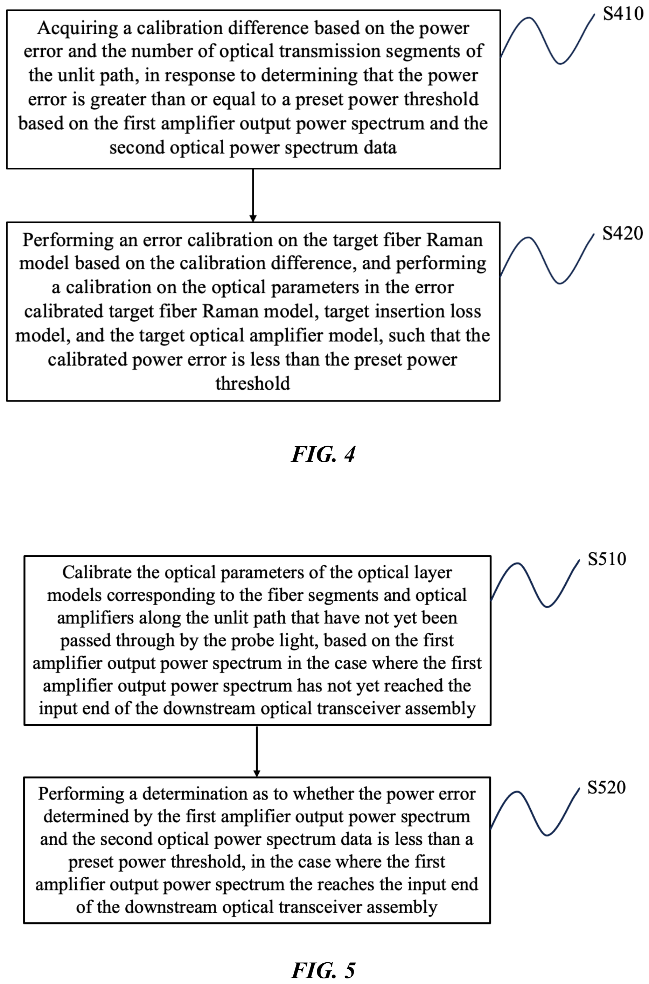

FIG. 4 depicts a flowchart showing additional operations performed after operation S330 illustrated in FIG. 3 according to an embodiment of the present disclosure. In some embodiments, after obtaining the optimized target optical amplifier model and the first amplifier output power spectrum, the method includes, without limitations operations S410 to S420.

At operation S410, in response to determining that the power error is greater than or equal to a preset power threshold based on the first amplifier output power spectrum and the second optical power spectrum data, a calibration difference is obtained based on the power error and the number of optical transmission segments of the unlit path. The power error is the difference between the first amplifier output power spectrum and the second optical power spectrum.

At operation S420, an error calibration is performed on the target fiber Raman model based on the calibration difference, and a calibration is performed on the optical parameters in the error calibrated target fiber Raman model, target insertion loss model, and target optical amplifier model, such that the calibrated power error is less than the preset power threshold.

In some implementations of operation S420, when the power error determined based on the first amplifier output power spectrum and the second optical power spectrum data is greater than or equal to the preset power threshold, the output result of the target fiber Raman model obtained after error calibration is used to iteratively perform the calibration of the optical parameters of the fiber Raman model, the optical parameters of the insertion-loss model, and the optical parameters of the amplifier model as described in the foregoing embodiments, i.e., the operations of S310 to S330 are performed iteratively, with a new first amplifier output power spectrum output in each iteration, until the power error calculated from the current iteration of the first amplifier output power spectrum is less than the preset power threshold. As such, the accuracy of the currently calibrated and optimized model is sufficiently high such that the end-to-end downstream service prediction results are consistent with the actual detection results, and the error calibration of the optical parameters of the optical layer models is done.

In some embodiments, operations S410 and S420 correspond to a situation in which the power error is greater than or equal to the preset threshold. In this case, the parameter calibration of the model indicates that the end-to-end downstream service prediction results still exhibit a significant deviation from the actual detection results, and the accuracy of the target optical layer model is insufficient and does not meet the required precision. Therefore, further parameter calibration is necessary, in which the link section corresponding to each optical transmission segment shares an error amount of Err/N, where N represents the total number of optical transmission segments. By iteratively performing error calibration on the target fiber Raman model, the target fiber Raman model, the insertion-loss model, and the amplifier model, until the corresponding power error is less than the preset threshold, the calibrated target optical layer model be consistent with the actual detection results and thereby enable end-to-end OSNR prediction with high precision.

FIG. 5 depicts a flowchart showing additional operations before operation S340 shown in FIG. 3 is performed, according to an embodiment of the present disclosure. In some embodiments, the method further includes without limitations, operations S510 to S520, before determining that the power error is less than the preset power threshold based on the first amplifier output power spectrum data and the second optical power spectrum data.

At operation S510, in the case where the first amplifier output power spectrum has not yet reached the input end of the downstream optical transceiver assembly, the optical parameters of the optical layer models corresponding to the fiber segments and optical amplifiers along the unlit path that have not yet been passed through by the probe light, are calibrated based on the first amplifier output power spectrum.

At operation S520, a determination is performed as to whether the power error determined by the first amplifier output power spectrum and the second optical power spectrum data is less than a preset power threshold, in the case where the first amplifier output power spectrum the reaches the input end of the downstream optical transceiver assembly.

In some embodiments, operation S510 corresponds to the case where the probe light does not reach the optical cross-connect (end of a multiplexing section). In this case, since the first amplifier output power spectrum has not passed through the entire unlit path, the calibration and optimization of the models corresponding to all fiber segments and optical amplifiers on the unlit path have not been completed. The first amplifier output power spectrum cannot represent the final path power of the unlit path. Therefore, the optical parameters in the fiber Raman model, insertion loss model and optical amplifier model corresponding to the fiber segments and optical amplifiers along the unlit path that the probe light has not been passed through are calibrated according to the first amplifier output power spectrum, so as to continue with the optimization and calibration of the models of the remaining sections until the probe light passes through entire unlit path link. At that point, the optimization and calibration of the optical layer model of the entire path is completed.

In some embodiments, operation S520 corresponds to the case where the probe light arrives at the optical cross-connect (end of the multiplexing section). In this case, the calibration and optimization of the models corresponding to all fiber segments and optical amplifiers on the unlit path have been completed. The first amplifier output power spectrum can directly represent the final path power of the unlit path. Then, the subsequent determination is performed based on the first amplifier output power spectrum and the second optical power spectrum data to determine whether the power error is less than the preset power threshold, so as to determine the target fiber Raman model, the target insertion loss model and the target optical amplifier model as the target optical layer models.

At operation S130, an optical signal-to-noise ratio (OSNR) of an unlit path is determined based on the target optical layer model, in response to the service switching to the unlit path.

In some embodiments, in response to a service switching to the unlit path, i.e., when a service switches from the operating path to the unlit path during link recovery, end-to-end OSNR prediction is achieved based on the optimized target optical layer models as described in the above embodiments.

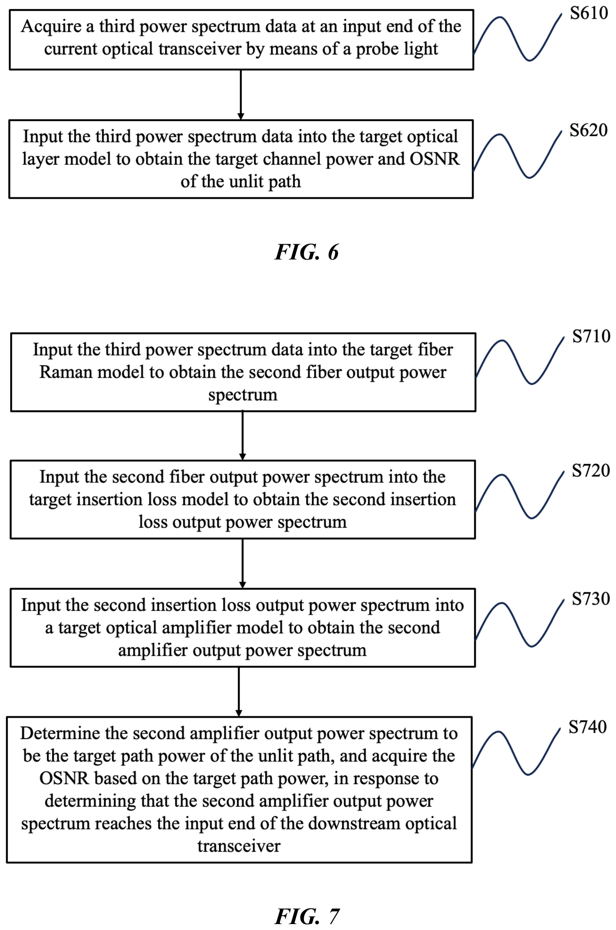

FIG. 6 depicts a flowchart showing an implementation of operation S130 described in FIG. 1 according to an embodiment of the present disclosure. In some embodiments, determining the OSNR of the unlit path according to the target optical layer models, includes without limitations operations S610 to S620.

At operation S610, a third power spectrum data at an input end of the current optical transceiver assembly is acquired by means of a probe light.

At operation S620, the third power spectrum data is input into the target optical layer model to obtain the target channel power and OSNR of the unlit path.

In some embodiments, operation S610 corresponds to the case where the third power spectrum data of the current optical transceiver assembly input obtained by means of the probe light is the optical power spectrum data of the real service. In such a case, the end-to-end OSNR prediction when the service switches from the operating path to the unlit/standby path during connection recovery is achieved.

In some embodiments, at S620 in which, the third power spectrum data is input into the target optical layer model to obtain the target path power and OSNR of the unlit path, which corresponds to the process of the corresponding light signals of real service sequentially entering the optical fiber segment of the unlit path and the optical amplifier. In this process, since the optical layer model of the unlit path has been calibrated and optimized in the operation S120 described above, the OSNR of the unlit path can be determined according to the target optical layer model. As such, high-precision OSNR prediction from end to end of the service is achieved, thereby improving the success rate of service routing recovery during optical network operation and maintenance.

FIG. 7 depicts a flowchart showing an implementation of operation S620 in FIG. 6 according to an embodiment of the present disclosure. In some embodiments, the target optical layer models include a target fiber Raman model, a target insertion loss model, and a target optical amplifier model. Accordingly, inputting the third power spectrum data into the target optical layer model to obtain the target path power and OSNR of the unlit path, includes without limitations operations S710 to S740.

At operation S710, the third power spectrum data is input into the target fiber Raman model to obtain the second fiber output power spectrum.

At operation S720, the second fiber output power spectrum is input into the target insertion loss model to obtain the second insertion loss output power spectrum.

At operation S730, the second insertion loss output power spectrum is input into a target optical amplifier model to obtain the second amplifier output power spectrum.

At operation S740, when the second amplifier output power spectrum reaches the input end of the downstream optical transceiver assembly, the second amplifier output power spectrum is determined to be the target path power of the unlit path, and the OSNR is obtained based on the target path power.

In some embodiment, at operation S710, the third power spectrum data corresponding to the actual service is fed into the optimized target fiber Raman model. The target fiber Raman model includes the updated and optimized optical parameters as described in the above embodiments. These optical parameters include, without limitations, fiber wavelength-dependent loss and fiber Raman coefficient. As such, the estimated second fiber output power spectrum can be output by means of the target fiber Raman model. The second fiber output power spectrum is used as the input of the subsequent target insertion loss model.

In some embodiments, at operation S720, the second fiber output power spectrum is fed into the optimized target insertion loss model. The target insertion loss model includes the updated and optimized optical parameter as described in the above embodiments. The optical parameter include, without limitations, wavelength-dependent loss. As such, the estimated second insertion loss output power spectrum can be output through the target insertion loss model. The second insertion loss output power spectrum is used as the input of the subsequent target optical amplifier model.

In some embodiments, at operation S730, the second insertion loss output power spectrum is fed into the optimized target optical amplifier model. The target optical amplifier model includes the updated and optimized optical parameters as described in the above embodiments. These optical parameters include, without limitations, fiber wavelength-dependent loss and fiber Raman coefficient. As such, the estimated second amplifier output power spectrum can be output through the target optical amplifier model. The second amplifier output power spectrum is provided to determine the second amplifier output power spectrum as the target path power of the unlit path, and to acquire the OSNR based on the target path power.

In some embodiments, at operation S740, when the second amplifier output power spectrum reaches the input of the downstream optical transceiver assembly, it indicates that the second amplifier output power spectrum has passed through the models corresponding to all fiber segments and optical amplifiers on the unlit path. In this case, the second amplifier output power spectrum can be directly used to represent the final path power of the unlit path. Therefore, the second amplifier output power spectrum can be determined as the target path power of the unlit path, and the OSNR can be obtained based on the target path power. As such, high-precision OSNR prediction from end to end of the service is achieved, thereby improving the success rate of service routing recovery during optical network operation and maintenance.

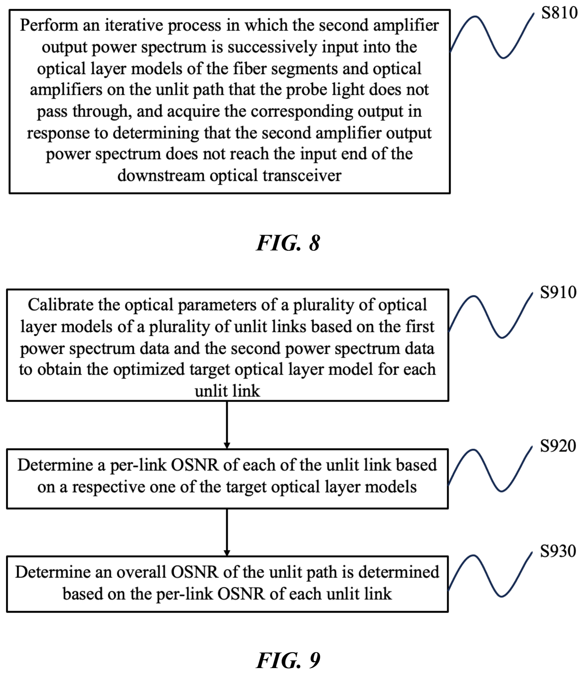

FIG. 8 depicts a flowchart showing the additional operations after operation S730 in FIG. 7 according to an embodiment of the present disclosure. In some embodiments, the target optical layer models include a target fiber Raman model, a target insertion loss model, and a target optical amplifier model. Accordingly, inputting the third power spectrum data into the target optical layer model to obtain the target path power and OSNR of the unlit path, includes without limitations operation S810.

At operation S810, in the case where the second amplifier output power spectrum does not reach the input end of the downstream optical transceiver assembly, an iterative process is performed in which the second amplifier output power spectrum is successively input into the optical layer models of the fiber segments and optical amplifiers on the unlit path that the probe light does not pass through, and the corresponding output is obtained. This iteration continues until the output power spectrum reaches the input end of the downstream optical transceiver assembly, at which point the power spectrum is determined as the target path power.

In some embodiments, at operation S810, the second amplifier output power spectrum is used as the initial input. By iteratively processing the output results of the optical layer models corresponding to the fiber segments and optical amplifiers on the unlit path that the probe light does not pass through, a final output power spectrum that reaches the input end of the downstream optical transceiver assembly is obtained. The arriving power spectrum, which is received at the input end of the downstream optical transceiver assembly, may be determined as the target path power.

In some embodiments, operation S810 corresponds to the situation in which the probe light does not reach the optical cross-connect (i.e., the end of the multiplexing segment). In this case, the second amplifier output power spectrum does not pass the entire unlit path link and therefore cannot represent the final path power of the unlit path. Accordingly, the second amplifier output power spectrum is input into the fiber Raman model, insertion-loss model, and amplifier model corresponding to the fiber segments and optical amplifiers in the unlit path that the probe light does not pass through. When the ultimately output power spectrum reaches the optical cross-connect (i.e., the end of the multiplexing segment), this final output power spectrum is determined as the target path power, and the OSNR is obtained based on the final output power spectrum.

FIG. 9 depicts a flowchart showing the determination of the overall OSNR of an unlit path according to an embodiment of the present disclosure. In some embodiments, the unlit path includes a plurality of unlit links. The method includes, without limitations, operations S910 to S930.

At operation S910, the optical parameters of a plurality of optical layer models of a plurality of unlit links are calibrated based on the first power spectrum data and the second power spectrum data to obtain the optimized target optical layer model for each unlit link.

At operation S920, a per-link OSNR of each of the unlit link is determined based on a respective one of the target optical layer models.

At operation S930, an overall OSNR of the unlit path is determined based on the per-link OSNR of each unlit link.

In some embodiments, operations S910 to S930 correspond to a scenario in which the unlit path comprises multiple unlit path links/channels. In this scenario, the target optical layer model, channel power, and OSNR as described in the foregoing embodiments represent the optical layer model, channel power, and OSNR of a single unlit path link on a per-link/channel basis. Accordingly, in this scenario, the optimized target optical layer model of each unlit path link is combined, and based on each target optical layer model, the per-channel OSNR of the corresponding unlit path link is determined. The per-channel channel power and OSNR are then concatenated in sequence according to the order of the multiplexing segments, such that the end-to-end channel power and OSNR across multiple multiplexing segments for the service are ultimately calculated. This enables high-accuracy OSNR estimation for multi-channel transmission, thereby improving the success rate of service routing recovery in optical network operation and maintenance.

According to a second aspect of the present disclosure, a system for detecting an unlit path is provided. The system includes:
a probe light, which is configured to acquired first optical power spectrum data at an output end of a current optical transceiver assembly, and second optical power spectrum data at an input end of a downstream optical transceiver assembly of the current optical transceiver assembly; and
an optical transceiver assembly, which is configured to calibrate optical parameters of an optical layer model based on the first power spectrum data and the second power spectrum data to obtain an optimized target optical layer model; and to determine an OSNR of the unlit path based on the target optical layer model in response to a service switch to the unlit path.

In some embodiments, the optical probe light is further configured to be used to acquire third power spectrum data at the input end of the current optical transceiver assembly when the service is switched to the unlit path. The third power spectrum data is set as input to the target optical layer model so as to obtain the OSNR and target channel power of the unlit path based on the target optical layer model.

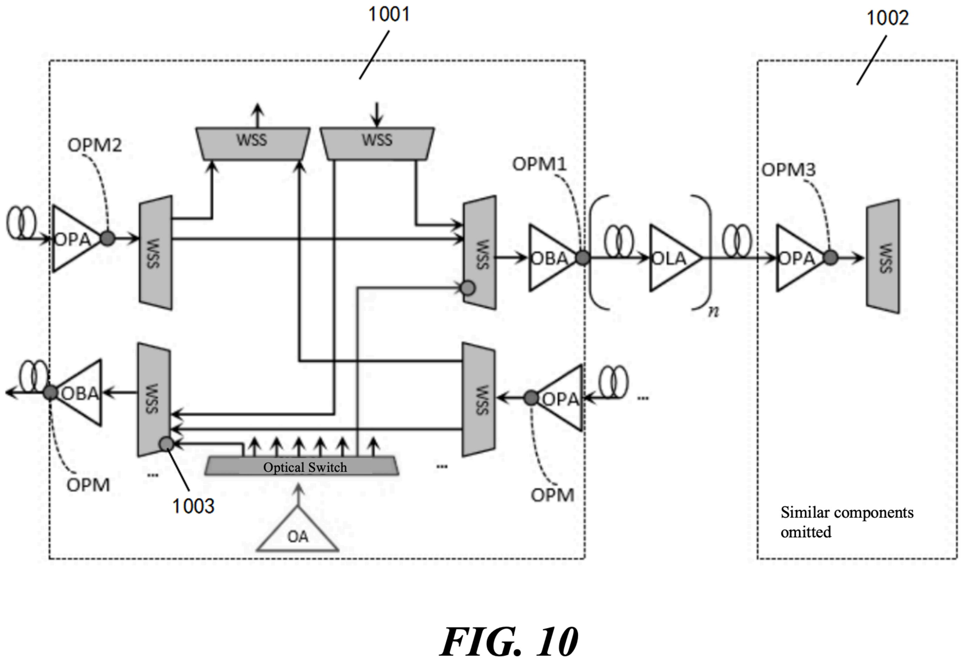

FIG. 10 depicts a schematic diagram showing an optical transceiver assembly according to an embodiment of the present disclosure. The current and downstream optical transceiver assemblies each includes, an Optical Amplifier (OA) configured to serve as a probe light source, an Optical Switch, a Wavelength Selective Switch (WSS), an Optical Booster Amplifier (OBA), an Optical Performance Monitor (OPM), and an Optical Pre-Amplifier (OPA). In a non-limiting embodiment, an Optical Line Amplifier (OLA) is connected between the current optical transceiver assembly 1001 and the downstream optical transceiver assembly 1002. The current optical transceiver assembly is further provided with a first Optical Performance Monitor (OPM1) and a second Optical Performance Monitor (OPM2), while the downstream optical transceiver assembly is provided with a third Optical Performance Monitor (OPM3).

In a non-limiting embodiment, OPM1 is disposed at the OBA of the current optical transceiver assembly connecting the downstream optical transceiver assembly, and is configured to acquire the aforementioned first power spectrum data. The second Optical Performance Monitor (OPM2) is disposed at the OPA of the current optical transceiver module that receives service light, and is configured to acquire the third power spectrum data as described above. OPM3 is disposed at the OPA of the downstream optical transceiver assembly connecting the current optical transceiver assembly, and is configured to acquire the second power spectrum data as described above.

In some embodiments, the transmission of the probe light from an optical transceiver assembly to the unlit path is as follows. Taking a two-dimensional Re-Configurable Optical Add-Drop Multiplexer (ROADM) site as an example, the probe light source is an Optical Amplifier (OA) with no input signal, which generates a broadband probe light output. In particular, depending on the type of optical amplifier, probe light with a spectral width of 4 THz, 4.8 THz, or 6 THz in the C-band or L-band may be output. The broadband probe light passes through an Optical Switch, which can switch the probe light to multiple optical paths. The number of supported switchable paths is greater than or equal to the dimension of the ROADM site. The probe light then enters the downstream optical transmission link via the high-isolation port 1003 of a Wavelength Selective Switch (WSS). The isolation is greater than or equal to 35 dB to avoid crosstalk with any possible real service signals. The probe light is introduced into the unlit (standby) path via a Wavelength Selective Switch (WSS), such that the link is filled with broadband probe light across the entire available spectrum, thereby establishing a full-band operating state. The power of the probe light can be jointly adjusted by the total output power of the OA and the attenuation of the WSS, so as to support the requirement of refreshing optical parameters in the models. When reaching the downstream ROADM site, the probe light is blocked by the WSS. In summary, the probe light used in the embodiments of the present disclosure exhibits the features of low cost, multi-direction capability, and adjustable power.

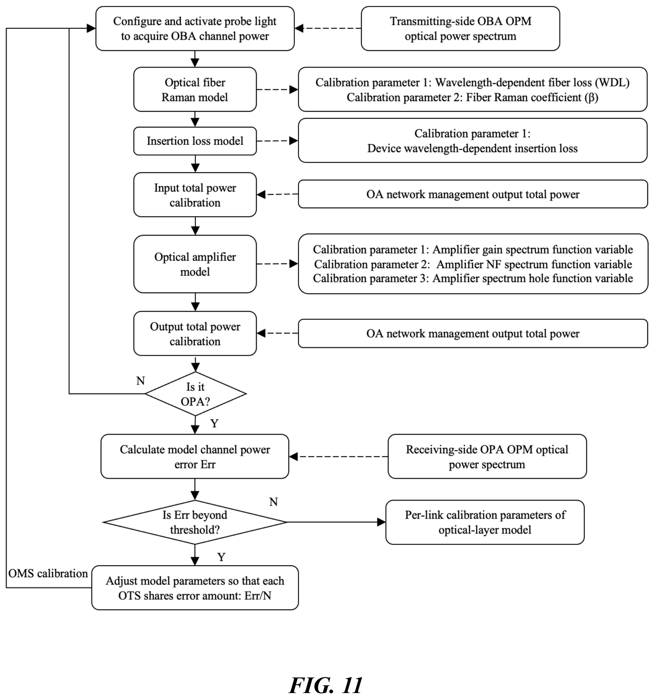

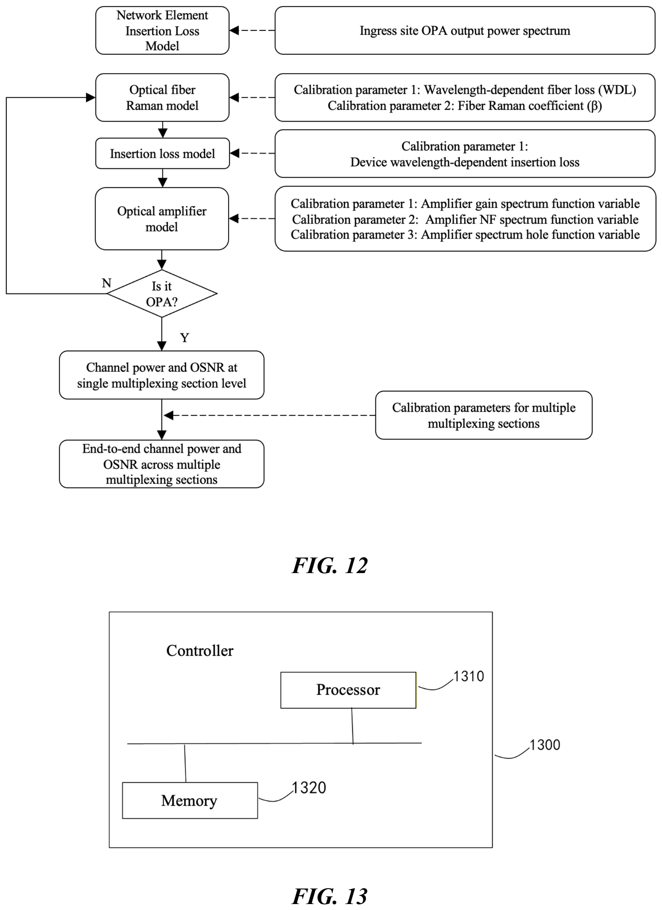

FIG. 11 depicts the acquisition of the optimized target optical layer models of the unlit path in a method according to an embodiment of the present disclosure. FIG. 12 depicts the determination of the OSNR based on the target optical layer models in a method according to an embodiment of the present disclosure. Accordingly, embodiment #1 is illustrated as follows.

In scenarios of fiber link degradation and periodical temperature variations, the following service configuration is taken as an example: C-band spectrum range of 6 THz (1524.7-1571.9 nm) with a grid spacing of 100 GHz is employed, forming a 60-channel system, and the signal has a 3 dB bandwidth of 91.5 GHz. The optical transmission link is configured with three multiplexing sections, each including five fiber spans, in which each optical cross-connect sites employ a two-dimensional ROADM node. The standby path remains unlit across the entire spectral band. During service restoration switching, when the service is switched from the operating path to the unlit/ standby path, the method set forth in the present disclosure enables end-to-end OSNR estimation.

The probe light is emitted and received by the optical transceiver assemblies of three optical cross-connect sites, in which the probe light is emitted from the output end of the current optical transceiver assembly at the local site and received at the input end of the optical transceiver assembly at the downstream site, thereby refreshing the optical parameters of the link models for three multiplexing sections. The probe light source is an Optical Amplifier (OA) with no input signals, which generates probe light output in the C-band with a spectral width of 6 THz. The probe light is introduced to the optical path to be calibrated via a 1×4 Optical Switch, and then enters the downstream optical transmission link through the high-isolation port of a Wavelength Selective Switch (WSS). Since the unlit (standby) link carries no service within the C-band 6 THz range, the probe light is introduced into the unlit path (standby path) via the Wavelength Selective Switch (WSS), such that the link is covered by broadband probe light across the entire available spectral band, thereby establishing a full-band occupied operating state. The grid is set to 100 GHz, the 3 dB spectral width is set to 85 GHz, and the single-channel output power is set to +5 dBm and -5 dBm, respectively, so as to trigger probe light sensing twice. After the probe light is activated, the channel power of the Optical Booster Amplifier (OBA) is acquired through an Optical Performance Monitor (e.g., OPM1) arranged at the OBA side of the current site.

In some embodiments, when the probe light enters the fiber, the fiber Raman model is executed to calculate the fiber output power spectrum. According to the methods of the embodiments, based on the final iterative error, calibration is required for the following parameters: (1) wavelength-dependent fiber loss, and (2) fiber Raman coefficient β. For the calibration of the fiber Raman coefficient β, probe light with two different input powers is respectively injected into the link to obtain link data. The two sets of link data are then combined to perform the calibration.

In some embodiments, when the probe light enters the insertion-loss model, the output power spectrum of devices such as variable optical attenuators is calculated. In the methods of the present disclosure, based on the final iterative error, calibration is required for the following parameter: (1) device wavelength-dependent loss.

In some embodiments, the total power value of the output power spectrum calculated by the insertion-loss model is required to be consistent with the input total power reported by the current Optical Amplifier (OA, including OBA/OLA/OPA) in the link. When a deviation is detected, the output power spectrum of the insertion-loss model is calibrated accordingly.

In some embodiments, when the probe light enters the amplifier, the amplifier output power spectrum is calculated. In the methods of the present disclosure, based on the final iterative error, calibration is required for the following parameters: (1) the amplifier gain spectrum function variable, (2) the amplifier noise figure spectrum function variable, and (3) the amplifier spectral hole-burning function variable.

In some embodiments, the calculated total power value of the optical amplifier output power spectrum is required to be consistent with the output total power reported by the current optical amplifier (OBA/OLA/OPA) in the link. When a deviation is detected, the output power spectrum of the amplifier model is calibrated accordingly.

In some embodiments, it is necessary to determine whether the link is an OPA, that is, whether the probe light reaches the optical cross-connect (the end of the multiplexing section). If the determination result is "No," the above model calculation is performed for the subsequent fiber segment, or optical amplifier; if the determination result is "Yes," the procedure proceeds to the subsequent level determination.

In some embodiments, if the preceding level determination result is "Yes," the optical power spectrum measured by OPM3 at the downstream OPA side is read and compared with the calculated optical power spectrum to obtain the model channel power error *Err.*

In some embodiments, when the error *Err* exceeds a predefined threshold, model parameters are calibrated such that each channel corresponding to an optical transmission system shares an error amount of *Err*/*N,* where *N* denotes the total number of optical transmission systems, which is set to 5 in this embodiment. Conversely, when the error does not exceed the threshold, it indicates that the model parameter calibration has enabled the end-to-end downstream service to reach the detection result of actual situations, the model accuracy is sufficient, and the channel-level calibration parameter of the optical layer model for a single multiplexing section is output.

By respectively performing the above operations for three multiplexing sections, the calibration parameters required to be updated for the three multiplexing sections can be obtained.

When an actual service switches from the operating path to the unlit/standby path, the optical power spectrum measured by OPM2 at the OPA side of the current site is first obtained and then input into the network element insertion-loss model to estimate the output power spectrum.

In some embodiments, when data related to the actual service is input into the fiber Raman model, the model reads and updates calibration parameter (1) wavelength-dependent fiber loss and calibration parameter (2) fiber Raman coefficient, and finally estimates the output power spectrum.

In some embodiments, the fiber output power spectrum is input into the insertion-loss model. The model reads and updates calibration parameter (1) wavelength-dependent loss, and estimates the output power spectrum.

In some embodiments, the output power spectrum of the insertion-loss model is input into the optical amplifier model, in which calibration parameter (1) amplifier gain spectrum function variable, calibration parameter (2) amplifier noise figure spectrum function variable, and calibration parameter (3) amplifier spectral hole-burning function variable are read and updated, and the output power spectrum is finally estimated.

In some embodiments, it is determined whether the optical amplifier output power spectrum the enters the Optical Power Amplifier (OPA). If the determination result is "No," the above model calculation is performed for the subsequent fiber segment, and subsequent optical amplifier; if the determination result is "Yes," the procedure proceeds to the subsequent level of determination.

In some embodiments, when the preceding-level determination result is "Yes," the channel power and the OSNR at the single multiplexing-section level can be output.

In some embodiments, by incorporating the calibration parameters of multiple multiplexing sections, the channel power and OSNR of each single multiplexing section are input into the model sequentially according to the order of the multiplexing sections, to obtain the end-to-end channel power and OSNR across multiple multiplexing sections, thereby enabling high-precision end-to-end OSNR estimation.

Embodiment #2 is illustrated as follows.

In the scenario of interconnection between legacy and new equipment, the following service configuration is taken as an example: the service adopts a C-band spectrum range of 6 THz (1524.7-1571.9 nm) with a grid spacing of 100 GHz, forming a 60-channel system, and the signal has a 3 dB bandwidth of 91.5 GHz. The optical transmission link is configured with three multiplexing sections, each including five fiber spans, in which each optical cross-connect site employs a two-dimensional ROADM node. The standby path remains unlit across the entire spectral band. During service restoration switching, when the service is switched from the operating path to the unlit/ standby path, the method set forth in the present disclosure enables end-to-end OSNR estimation.

The probe light is emitted and received by the optical transceiver assemblies of three optical cross-connect sites, in which the probe light is emitted from the output end of the current optical transceiver assembly at the local site and received at the input end of the optical transceiver assembly at the downstream site, thereby refreshing the optical parameters of the link models for three multiplexing sections respectively, so that when service switching actually occurs, the service OSNR can be accurately estimated. The probe light source is an Optical Amplifier (OA) with no input signals, which generates probe light output in the C-band with a spectral width of 6 THz. The probe light is introduced to the optical path to be calibrated via a 1×4 Optical Switch, and then enters the downstream optical transmission link through the high-isolation port of a Wavelength Selective Switch (WSS). Since the unlit (standby) link carries no service within the C-band 6 THz range, the probe light is introduced into the unlit path (standby path) via the Wavelength Selective Switch (WSS), such that the link is covered by broadband probe light across the entire available spectral band, thereby establishing a full-band occupied operating state. The grid is set to 100 GHz, the 3 dB spectral width is set to 85 GHz, and the single-channel output power is set to +5 dBm and -5 dBm, respectively, so as to trigger probe light sensing twice. After the probe light is activated, the channel power of the Optical Booster Amplifier (OBA) is acquired through an Optical Performance Monitor (e.g., OPM1) arranged at the OBA side of the current site.

In some embodiments, when the probe light enters the fiber, the fiber Raman model is executed to calculate the fiber output power spectrum. According to the methods of the embodiments, based on the final iterative error, calibration is required for the following parameters: (1) wavelength-dependent fiber loss, and (2) fiber Raman coefficient β. For the calibration of the fiber Raman coefficient β, probe light with two different input powers is respectively injected into the link to obtain link data. The two sets of link data are then combined to perform the calibration.

In some embodiments, when the probe light enters the insertion-loss model, the output power spectrum of devices such as variable optical attenuators is calculated. In the methods of the present disclosure, based on the final iterative error, calibration is required for the following parameter: (1) device wavelength-dependent loss.

In some embodiments, the total power value of the output power spectrum calculated by the insertion-loss model is required to be consistent with the input total power reported by the current Optical Amplifier (OA, including OBA/OLA/OPA) in the link. When a deviation is detected, the output power spectrum of the insertion-loss model is calibrated accordingly.

In some embodiments, when the probe light enters the amplifier, the amplifier output power spectrum is calculated. In the methods of the present disclosure, based on the final iterative error, calibration is required for the following parameters: (1) the amplifier gain spectrum function variable, (2) the amplifier noise figure spectrum function variable, and (3) the amplifier spectral hole-burning function variable. During calibration, it should be noted that, due to the absence of underlying calibration data in legacy equipment, the initial underlying model may be established based on the gain spectra and noise figure spectra described under different input conditions in the manufacturer's specifications. By refreshing with the current probe light, the relevant spectral functions can be calibrated.

In some embodiments, the calculated total power value of the optical amplifier output power spectrum is required to be consistent with the output total power reported by the current optical amplifier (OBA/OLA/OPA) in the link. When a deviation is detected, the output power spectrum of the amplifier model is calibrated accordingly.

In some embodiments, it is necessary to determine whether the link is an OPA, that is, whether the probe light reaches the optical cross-connect (the end of the multiplexing section). If the determination result is "No," the above model calculation is performed for the subsequent fiber segment, or optical amplifier; if the determination result is "Yes," the procedure proceeds to the subsequent determination.

In some embodiments, if the preceding level determination result is "Yes," the optical power spectrum measured by OPM3 at the downstream OPA side is read and compared with the calculated optical power spectrum to obtain the model channel power error *Err.*

In some embodiments, when the error *Err* exceeds a predefined threshold, model parameters are calibrated such that each channel corresponding to an optical transmission system (OTS) shares an error amount of *Err*/*N,* where *N* denotes the total number of optical transmission systems, which is set to 5 in this embodiment. Conversely, when the error does not exceed the threshold, it indicates that the model parameter calibration has enabled the end-to-end downstream service to reach the detection result of actual situations, the model accuracy is sufficient, and the channel-level calibration parameter of the optical layer model for a single multiplexing section is output.

By respectively performing the above operations for three multiplexing sections, the calibration parameters required to be updated for the three multiplexing sections can be obtained.

When an actual service switches from the operating path to the unlit/standby path, the optical power spectrum measured by OPM2 at the OPA side of the current site is first obtained and then input into the network element insertion-loss model to estimate the output power spectrum.

In some embodiments, when data related to the actual service is input into the fiber Raman model, the model reads and updates calibration parameter (1) wavelength-dependent fiber loss and calibration parameter (2) fiber Raman coefficient, and finally estimates the output power spectrum.

In some embodiments, the fiber output power spectrum is input into the insertion-loss model. The model reads and updates calibration parameter (1) wavelength-dependent loss, and estimates the output power spectrum.

In some embodiments, the output power spectrum of the insertion-loss model is input into the optical amplifier model, in which calibration parameter (1) amplifier gain spectrum function variable, calibration parameter (2) amplifier noise figure spectrum function variable, and calibration parameter (3) amplifier spectral hole-burning function variable are read and updated, and the output power spectrum is finally estimated.

In some embodiments, it is determined whether the optical amplifier output power spectrum the enters the Optical Power Amplifier (OPA). If the determination result is "No," the above model calculation is performed for the subsequent fiber segment, and subsequent optical amplifier; if the determination result is "Yes," the procedure proceeds to the subsequent level of determination.

In some embodiments, when the preceding-level determination result is "Yes," the channel power and the OSNR at the single multiplexing-section level can be output.

n some embodiments, by incorporating the calibration parameters of multiple multiplexing sections, the channel power and OSNR of each single multiplexing section are input into the model sequentially according to the order of the multiplexing sections, to obtain the end-to-end channel power and OSNR across multiple multiplexing sections, thereby enabling high-precision end-to-end OSNR estimation for service scenarios involving interconnection between legacy and new systems.

In some embodiments, calibration of optical parameters in the fiber Raman model includes substituting the channel output power spectrum of the probe light signal into the fiber Raman model and performing calibration of the optical parameters therein based on link data, thereby obtaining an optimized target fiber Raman model. The link data comprises either underlying calibration data stored at the optical cross-connects of the unlit path or predefined optical power spectrum-related data. The underlying calibration data corresponds to the scenario of Embodiment 1, whereas the predefined optical power spectrum-related data corresponds to the scenario of Embodiment 2 involving interconnection between legacy and new systems.

According to a third aspect, a controller is provided. FIG. 13 depicts a schematic diagram showing the controller according to an embodiment of the present disclosure.

The controller includes a memory, a processor and a computer program stored in the memory and executable by the processor which, when executed by the processor , causes the processor to carry out the operations of any one the methods described above, for example, the above-described operations S110 to S130 described in conjunction with FIG. 1, S310 to S340 described in conjunction with FIG. 3, S410 to S420 described in conjunction with FIG.4, S510 to S520 described in conjunction with FIG. 5, S610 to S620 described in conjunction with FIG. 6, S710 to S740 described in conjunction with FIG.7, S810 described in conjunction with FIG. 8, or S910 to S930 described in conjunction with FIG. 9.

According to an embodiment, the controller 1300 includes one or more processors 1310 and one or more memories 1320, while one processor 1310 and one memory 1320 are shown in FIG. 7 by way of example.

The processor 1310 and the memory 1320 may be connected by a bus or other means. The connection is shown as bus by way of an example in FIG. 7.

As a non-transitory computer-readable storage medium, the memory 1320 can be configured to store non-transitory software programs and non-transitory computer-executable programs. In addition, the memory 1320 can include high-speed random-access memory and non-transitory memory, such as at least one disk memory device, flash memory device, or other non-transitory solid-state memory devices. In some implementations, the memory 1320 may include memories 1320 remotely located relative to the processor 1310, and these remote memories may be connected to the controller 1300 through a network. Meanwhile, the examples of the above networks may include, but are not limited to, the Internet, enterprise intranets, local area networks (LANs), mobile communication networks, and any combination thereof.

In some embodiments, when executing a computer program, the processor may perform the operations of the method described in any of the foregoing embodiments at predetermined time intervals.

It can be understood by those having ordinary skills in the art that the device shown in FIG. 7 does not constitute a limitation to the controller 1300 which may include more or less components than those shown, or some components may be combined, or have different component arrangements.

In the controller 1300 illustrated in FIG. 13, the processor 1310 may be configured to invoke the program related to the method for detecting an unlit path stored in the memory 1320, to cause the processor to implement the method.

Based on the hardware architecture of the controller 1300, various embodiments of the system for detecting an unlit path are proposed in the present disclosure. In addition, the non-transitory computer programs and instructions required to implement the method of any one of the foregoing embodiments are stored in the memory, which when executed by the processor, causes the processor to carry out the method of any one of the foregoing embodiments.

According to an embodiment of the present disclosure, a system for detecting an unlit path is provided. The system includes the controller described above.

In some embodiments, since the system for detecting the unlit path of the present disclosure includes the controller described in the foregoing embodiment, and the controller is capable of executing the method for detecting an unlit-path of the foregoing embodiments, the implementation and technical effects of the system may be referenced to the specific implementation and technical effects of any of the foregoing embodiments of the method.

According to a fifth aspect of the present disclosure, a computer-readable storage medium is provided. The computer-readable storage medium stores computer-executable instructions which, when executed by a processor, causes the processor to carry out the operations of any one the methods described above, for example, the above-described operations S110 to S130 described in conjunction with FIG. 1, S310 to S340 described in conjunction with FIG. 3, S410 to S420 described in conjunction with FIG.4, S510 to S520 described in conjunction with FIG. 5, S610 to S620 described in conjunction with FIG. 6, S710 to S740 described in conjunction with FIG.7, S810 described in conjunction with FIG. 8, or S910 to S930 described in conjunction with FIG. 9.

In summary, the method of the present application provides at least the following advantageous aspects.
(1) The method set forth in the present disclosure can be applied to optical transmission systems with various channel conditions, including the full-channel scenario, in which the probe light fills the entire channel range of the unlit/standby link into a fully-covered-channel state, and the partially-covered-channel scenario, in which only part of the channels are covered or carry services. Regardless of scenarios such as optical link degradation, device aging, temperature cycle variations, or interconnection between legacy and new equipment, the method set forth in the present disclosure ensures the accuracy of end-to-end service OSNR estimation for the unlit/standby link. By setting a reasonable preset attenuation value, the success rate of service recovery can be improved, thereby greatly enhancing the reliability of the service.
(2) The probe light employed in the method set forth in the present disclosure features low cost, multi-directional multiplexing, and adjustable power, which is applicable to most optical transmission network equipment. This allows for the flexible introduction of probe light into existing equipment without requiring large-scale modifications to network devices, thus reducing costs and complexity.
(3) The method set forth in the present disclosure can significantly enhance the adaptability of the optical-layer model under diverse networking conditions. In optical networks, various complex networking scenarios exist, such as different optical link lengths, different fiber types, and diverse equipment brands and models, all of which may affect the transmission performance of optical signals. By employing probe light-based calibration across different links, the method set forth in the present disclosure enhances the adaptability of the optical-layer model under diverse networking conditions and enables estimation of service OSNR across various networking scenarios.
(4) The method of the present application is transparent to modulation formats, which means that the accuracy of OSNR estimation in its application scenarios is independent of the service rate and modulation scheme. Different services may use different modulation scheme and rates, but this scheme can achieve OSNR estimation independently of these factors. This endows the method set forth in the present disclosure with greater flexibility and universality, enabling adaptation to diverse service requirements.
(5) The method and system of the present application exhibit strong versatility, in that the optical transceiver assembly can be configured in optical multiplexers or optical cross-connect sites, and are applicable to optical transmission systems with arbitrary channel conditions under both full-channel and partial-channel scenarios to enable estimation of service OSNR for standby links. Furthermore, the method effectively addresses conditions arising during long-term network operation, such as fiber loss variations, environmental temperature cycles, and interconnection between legacy and new equipment, thereby ensuring the accuracy of end-to-end service OSNR estimation for unlit/ standby links.

According to the method set forth in an embodiment of the present disclosure, by means of the probe light emitted by the optical transceiver assembly, the first power spectrum data at the output end of the current optical transceiver assembly and the second optical power spectrum data at the input end of the downstream optical transceiver assembly are accurately and effectively acquired. The optical parameters of the optical layer model are calibrated based on the first and second power spectrum data to improve the prediction accuracy of the optical layer model and obtain an optimized target optical layer model. Furthermore, when the current optical transceiver assembly is switched to the unlit path in response to a service switching, the OSNR of the unlit path is determined based on the target optical layer model. This enables high-precision end-to-end OSNR prediction in scenarios such as link degradation and interfacing between new and legacy equipment in the unlit path. The obtained OSNR can also be used to perform performance sensing and optimization on any node in the optical network, improving the success rate of service routing recovery during optical network operation and maintenance. This effectively reduces optical network operation and maintenance costs and improves network maintenance efficiency, thereby enhancing the performance and reliability of the entire optical network and providing higher quality network services.

The above-described device embodiments are only illustrative, in which the units illustrated as separate components may or may not be physically separated, that is, they may be located in one place or distributed over several network nodes. Some or all of the modules can be selected according to the practical needs to achieve the purpose of this embodiment.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer-readable storage media (or non-transitory media) and communication media (or transitory media). As is well known to a person having ordinary skills in the art, the term computer storage media includes volatile and nonvolatile, removable and non-removable media implemented in any method or technology for storing information such as computer readable instructions, data structures, program modules or other data. Computer storage medium include, but are not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for several embodiments of the present disclosure, but the present disclosure is not limited to the above embodiments. Those having ordinary skills in the art can various equivalent modifications or substitutions without departing the scope of the present disclosure, and these equivalent modifications or substitutions are within the scope defined by the claims of the present disclosure.

## Claims

1. A method for detecting an unlit path, which is applied to an optical transceiver assembly arranged in the unlit path, wherein the optical transceiver assembly is provided with a probe light, and the method comprises:
acquiring first optical power spectrum data at an output end of a current optical transceiver assembly, and second optical power spectrum data at an input end of a downstream optical transceiver assembly of the current optical transceiver assembly by means of the probe light;
calibrating optical parameters of a plurality of optical layer models based on the first optical power spectrum data and the second optical power spectrum data to obtain a plurality of optimized target optical layer models; and
determining an optical signal-to-noise ratio (OSNR) of the unlit path based on the target optical layer models, in response a service switching to the unlit path.

2. The method as claimed in claim 1, wherein
the optical layer models comprise, an optical fiber Raman model, an insertion loss model, and an optical amplifier model, and
calibrating the optical parameters of the plurality of optical layer models based on the first optical power spectrum data and the second optical power spectrum data to obtain the plurality of optimized target optical layer models, comprises:
calibrating the optical parameters in the fiber Raman model based on the first optical power spectrum data to obtain an optimized target fiber Raman model and a first fiber output power spectrum;
calibrating the optical parameters in the insertion loss model to obtain an optimized target insertion loss model and a first insertion loss output power spectrum, based on the first fiber output power spectrum and a total input power reported from the unlit path;
calibrating the optical parameters in the optical amplifier model to obtain an optimized target optical amplifier model and a first amplifier output power spectrum, based on the first insertion loss output power spectrum and the total output power reported from the unlit path; and
determining the target fiber Raman model, the target insertion loss model and the target optical amplifier model as target optical layer models, in response to determining that a power error determined based on the first amplifier output power spectrum and the second optical power spectrum data is less than a preset power threshold.

3. The method as claimed in claim 2, wherein after acquiring the optimized target optical amplifier model and the first amplifier output power spectrum, the method further comprises:
acquiring a calibration difference based on the power error and a number of optical transmission segments of the unlit path , in response to determining that the power error is greater than or equal to a preset power threshold based on the first amplifier output power spectrum and the second optical power spectrum data, wherein the power error is a difference between the first amplifier output power spectrum and the second optical power spectrum data; and
performing an error calibration on the target fiber Raman model based on the calibration difference, and calibrating the optical parameters in the calibrated target fiber Raman model, the optical parameters in the target insertion loss model, and the optical parameters in target optical amplifier model, such that the calibrated power error is less than the preset power threshold.

4. The method as claimed in claim 2, wherein before determining that the power error determined based on the first amplifier output power spectrum and the second optical power spectrum data is less than the preset power threshold, the method further comprises:
calibrating the optical parameters of the optical layer models corresponding to fiber segments and optical amplifiers along the unlit path that are yet to be passed through by the probe light, based on the first amplifier output power spectrum, before the first amplifier output power spectrum reaches the input end of the downstream optical transceiver assembly; and
determining whether the power error determined by the first amplifier output power spectrum and the second optical power spectrum data is less than the preset power threshold, in response to determining the first amplifier output power spectrum reaches the input end of the downstream optical transceiver assembly.

5. The method as claimed in claim 2, wherein
the optical parameters in the fiber Raman model comprises at least one of, wavelength-dependent fiber loss, or fiber Raman coefficient;
the optical parameters in the insertion-loss model comprises device wavelength-dependent loss; and
the optical parameters in the optical amplifier model comprises at least one of, amplifier gain spectral function variable, amplifier noise figure spectral function variable, or amplifier spectral hole-burning function variable.

6. The method as claimed in claim 1, wherein determining the OSNR of the unlit path based on the target optical layer models, comprises:
acquiring a third optical power spectrum data at an input end of the current optical transceiver assembly through the probe light; and
inputting the third optical power spectrum data into the target optical layer models to acquire a target path power and the OSNR of the unlit path.

7. The method as claimed in claim 6, wherein the plurality of target optical layer models comprises, a target optical fiber Raman model, a target insertion loss model, and a target optical amplifier model, and inputting the third optical power spectrum data into the target optical layer models to acquire the target path power and the OSNR of the unlit path, comprises:
inputting the third optical power spectrum data into the target fiber Raman model to acquire a second fiber output power spectrum;
inputting the second fiber output power spectrum into the target insertion loss model to acquire a second insertion loss output power spectrum;
inputting the second insertion loss output power spectrum into the target optical amplifier model to acquire a second amplifier output power spectrum; and
determining the second amplifier output power spectrum as the target path power of the unlit path, and acquiring the OSNR based on the target path power, in response to determining that the second amplifier output power spectrum reaches the input end of the downstream optical transceiver assembly.

8. The method as claimed in claim 7, wherein after acquiring the second amplifier output power spectrum, the method further comprises:
before the second amplifier output power spectrum does not reach the input end of the downstream optical transceiver assembly, iteratively inputting the second amplifier output power spectrum into the optical layer models of fiber segments and optical amplifiers on the unlit path that are yet to be passed through by the probe light, and acquiring an output, until the second amplifier output power spectrum reaches the input end of the downstream optical transceiver assembly, and
determining the second amplifier output power spectrum as the target path power in response to determining that the second amplifier output power spectrum reaches the input end of the downstream optical transceiver assembly.

9. The method as claimed in claim 1, wherein the unlit path comprises a plurality of unlit links, and the method comprises:
calibrating the optical parameters of the plurality of optical layer models for the plurality of unlit links based on the first optical power spectrum data and the optical second power spectrum data to obtain optimized target optical layer models for each unlit link;
determining a per-link OSNR of each of the unlit links based on a respective one of the target optical layer models; and
determining an overall OSNR of the unlit path based on each per-link OSNR of the respective one of the unlit links.

10. A system for detecting an unlit path, comprising:
a probe light, which is configured to acquire first optical power spectrum data at an output end of a current optical transceiver assembly, and second optical power spectrum data at an input end of a downstream optical transceiver assembly of the current optical transceiver assembly; and
an optical transceiver assembly, which is configured to calibrate optical parameters of an optical layer model based on the first optical power spectrum data and the optical second power spectrum data to obtain an optimized target optical layer model; and to determine an optical signal-to-noise ratio (OSNR) of the unlit path based on the target optical layer model in response to a service switching to the unlit path.

11. The system as claimed in claim 10, wherein the optical probe light is further configured to acquire third optical power spectrum data at an input end of the current optical transceiver assembly in response to the service switching to the unlit path; wherein, the third power spectrum data is set as an input to the target optical layer model so as to obtain the OSNR and a target channel power of the unlit path based on the target optical layer model.

12. A controller, comprising a memory, a processor and a computer program stored in the memory and executable by the processor which, when executed by the processor, causes the processor to carry out the method as claimed in any one of claims 1 to 9.

13. A computer-readable storage medium storing a computer-executable instruction which, when executed by a processor, causes the processor to carry out the method of any one of claims 1 to 9.
